(19) Europäisches Patentamt
European Patent Office
Office européen des brevets

(11) **EP 3 096 931 B1**

(12) **EUROPÄISCHE PATENTSCHRIFT**

(45) Veröffentlichungstag und Bekanntmachung des Hinweises auf die Patenterteilung:
**31.07.2019 Patentblatt 2019/31**

(21) Anmeldenummer: **14761303.8**

(22) Anmeldetag: **28.08.2014**

(51) Int Cl.:
*B29B 7/74* (2006.01)          *A23P 30/40* (2016.01)
*A23G 3/14* (2006.01)          *B29C 44/60* (2006.01)
*A23G 3/52* (2006.01)          *B29B 7/72* (2006.01)

(86) Internationale Anmeldenummer:
**PCT/EP2014/068272**

(87) Internationale Veröffentlichungsnummer:
**WO 2015/028556 (05.03.2015 Gazette 2015/09)**

(54) **VERFAHREN UND VORRICHTUNG ZUR PROZESSSTEUERUNG EINER ANLAGE ZUR KONTINUIERLICHEN HERSTELLUNG VON SCHÄUMEN**

METHOD AND DEVICE FOR THE PROCESS CONTROL OF A PLANT FOR THE CONTINUOUS PRODUCTION OF FOAMS

PROCÉDÉ ET DISPOSITIF DE COMMANDE DE PROCESSUS DANS UNE INSTALLATION DE PRODUCTION DE MOUSSES EN CONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2013 DE 102013217149**

(43) Veröffentlichungstag der Anmeldung:
**30.11.2016 Patentblatt 2016/48**

(73) Patentinhaber: **Kuchenmeister GmbH**
**59494 Soest (DE)**

(72) Erfinder:
• **JANK, Rüdiger**
  **16548 Glienicke (DE)**
• **WEBER, Matthias**
  **48231 Warendorf (DE)**
• **SCHINABECK, Theresa-Maria**
  **14469 Potsdam (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
EP-A1- 0 574 051          EP-A2- 1 669 183
DE-A1-102009 054 284      FR-A1- 2 424 808

**Beschreibung**

**Beschreibung**

Die vorliegende Erfindung betrifft ein Verfahren zur Prozesssteuerung einer Anlage zur kontinuierlichen Herstellung von Schäumen gemäß dem Oberbegriff des Anspruchs 1 und eine Vorrichtung zur Durchführung des Verfahrens gemäß Anspruch 9.

**Beschreibung**

Schäume, beziehungsweise auf diesem Schäumen basierende Produkte finden zunehmend in einer Vielzahl von Lebensmitteln Verwendung. Geschäumte Lebensmittel werden vom Verbraucher als cremiger und leichter empfunden. Die Herstellung von Schäumen erfolgt ganz allgemein durch Einschluss von Gasblasen in ein Medium. Im Lebensmittelbereich bewirkt das Einbringen von Gas in eine Lebensmittelgrundmasse und damit die Bildung von Schäumen zum Beispiel ein angenehmes Mundgefühl und Schmelzverhalten. Darüber hinaus wird eine Volumenvergrößerung der Grundmasse erzielt, die zum Beispiel im Falle von Biskuitmassen noch eine Voraussetzung für die Backfähigkeit der Biskuitmasse ist.

Im Lebensmittelbereich werden Schäume durch Einleiten von Luft beziehungsweise inerten Gasen in eine Flüssigkeit und durch eine starke Scherung der mit dem Gas versetzten Flüssigkeit zum Beispiel unter Verwendung einer geeigneten rotierenden Vorrichtung hergestellt. In Abhängigkeit von der Konsistenz der viskosen flüssigen Lebensmittelphasen wird das zu dispergierende Gas injiziert, eingeschlagen, eingerührt oder geknetet. Die Schaumstruktur entsteht durch die feine Verteilung des Gases in der viskosen Lebensmittelgrundmasse.

Im Allgemeinen wird unter Schäumen ein Medium von geringer Dichte verstanden, dass teilweise fließfähig oder fest ist. Schäume sind binäre Phasensysteme, deren äußere aus einer Grundmasse bestehende Phase ein Gas in Form von Blasen oder unregelmäßigen Polyedern umschließt. Dabei kann die Größe der eingeschlossenen Gasblasen im Mikrometerbereich aber auch im Millimeterbereich liegen.

Schäume, wie zum Beispiel Lebensmittelschäume, umfassen demnach kleine einander berührende Blasen, die je nach Volumenkonzentration des Gases verschiedene Formen einnehmen können. Ist zum Beispiel die Volumenkonzentration des Gases relativ klein, so haben die Gasblasen ein kugelförmiges Aussehen. Mit steigender Volumenkonzentration des Gases kommt es zu einem vermehrten Zusammenstoß der kugelförmigen Blasen mit anderen Blasen, so dass hierbei Polyeder verschiedener Flächenformengröße auftreten. Die einzelnen Gasblasen sind von einer doppelwandigen Schaumlamelle umschlossen, wobei das Innere der Doppelwand mit Flüssigkeit ausgefüllt ist. Ein polyederförmiger Schaum ist im Vergleich zu Schäumen mit lediglich kugelförmigen Blasen wesentlich stabiler. Damit die Blase durch den Normaldruck nicht zusammenfällt, herrscht in der Blase gegenüber der Umgebung ein Überdruck.

Zur Charakterisierung der Schäume, wie zum Beispiel anhand der Dichte, Blasenstruktur und Blasenverteilung, sind unterschiedliche Verfahren und Vorrichtungen in der Vergangenheit entwickelt worden.

Ein Ansatz zur Ermittlung der Blasenstruktur bietet die Bestimmung der Leitfähigkeit eines Schaumes, da die Leitfähigkeit eines Schaums Rückschlüsse auf die Blasengröße des Schaumes zulässt. Die elektrische Leitfähigkeit ist eine Stoffkonstante, die vom Medium, den darin gelösten Ionen, der Temperatur und dem Druck abhängig ist. Zusätzlich weisen Gasblasen, in Abhängigkeit von deren Größe, einen Einfluss auf die Leitfähigkeit aus. So wird davon ausgegangen, dass das im Schaum enthaltene Gas den elektrischen Strom nicht leitet, sondern als Isolator fungiert. Entsprechend sollten große Gasblasen die elektrische Leitfähigkeit stärker verringern als kleine. Die Leitfähigkeit eines Schaumes kann somit zur Bestimmung des Gasgehaltes beziehungsweise der Blasengrößenverteilung in einem Schaum herangezogen werden.

In der DE 10 2006 057 772 A1 ist zum Beispiel die Möglichkeit des Erfassens der Leitfähigkeit des erzeugten Schaums mittels Verwendung von zwei Elektroden beschrieben. Der hier beschriebene Ansatz zur Charakterisierung von Schäumen unter Erfassen der Leitfähigkeit wird unmittelbar während des Aufschaumprozesses durchgeführt. Entsprechend sind die Ausführungsformen so gestaltet, dass die zur Messung der Leitfähigkeit verwendeten Elektroden sich unmittelbar in dem Aufschlagsystem befinden.

Eine weitere Möglichkeit zur Charakterisierung von Schäumen wird unter anderen in der DE 19 810 092 A1 erwähnt. Hier wird der zu untersuchende Schaum in eine spezielle Messzelle eingebracht, an welche ein Ultraschallsignal angelegt wird. Durch das beschriebene Ultraschalltransmissionsverfahren soll es möglich sein, Materialparameter wie Absorption, Schallgeschwindigkeit, Viskosität und Kompressibilität als Funktion der Schaumentstehung zu ermitteln. Auch ist bei einer gleichzeitigen Frequenzanalyse ein Rückschluss auf Blasengröße und Blasengrößenverteilung möglich. Die Ultraschallmessung erfolgt während des Schaumbildungsprozesses.

Eine weitere Möglichkeit zur Charakterisierung von Schäumen wird in der EP 0 574 051 A1 offenbart. Lebensmittelschäume in der Lebensmittelindustrie sind typischerweise proteinhaltige Schäume zur Herstellung von Feinbackwaren und Süßwaren. Hauptbestandteil der Proteinschäume sind dabei Vollei oder Eiklar. Weitere Zutaten wie Zucker, Gelatine, Stärke und oberflächenaktive Stoffe dienen zur Stabilisierung der Schäume während der Weiterverarbeitung und der thermischen Fixierung durch den Backprozess. Neben den Proteinschäumen sind auch fettbasierende Schäume, wie zum Beispiel Schlagsahne bekannt, die durch Hydrokolloide stabilisiert werden können. Wesentlich für die Schaumbildung sind dabei die Grenzflächenspannung der schaumbildenden Proteine oder Fette, die Viskosität der innerlaminaren Flüssigkeit und die wirkenden Schwerkräfte während der Dispergierung.

Derartige Lebensmittelschäume werden industriell kontinuierlich hergestellt. Dabei wird eine Vorabmischung typischerweise durch eine axiale durchströmte Aufschlagmaschine geleitet und dann zur weiteren Prozessierung bzw. Verarbeitung durch eine Rohrleitung hin zu einer Dosierungseinheit transportiert. Jeder kontinuierlicher Prozess sollte dabei eine optimale und möglichst gleichbleibende Qualität liefern. Um die Qualität des Endproduktes zu gewährleisten, werden verschiedene Prozess- und Produktparameter wie die Schwergeschwindigkeit und Drehzahl des Rotors beziehungsweise Mischkopfes in der Aufschlagmaschine oder Aufschäumanlage, die Durchflussmenge, Temperatur und Dichte des hergestellten Schaumes gemessen. Für die Stabilität der Schäume und damit für die Qualität des Endproduktes sind die Porengröße und die Porenverteilung im dispersen Schaumsystem beziehungsweise in der Schaumstruktur entscheidend. Die Schaumstruktur beeinflusst neben der Viskosität der kontinuierlichen Phase und der angewendeten Rezeptur die Qualität des Endproduktes. In einem kontinuierlichen Verfahren wird die Einhaltung der Rezeptur durch Dosier- und Verwiegungssystem genau gesteuert und permanent kontrolliert. Weiterhin werden stichprobenartig die Dichten der Schäume gemessen.

Jedoch werden Strukturveränderungen der hergestellten Schäume bereits schon durch geringere Schwankungen der Rohstoffeigenschaften und Prozessparameter hervorgerufen. Eine Kontrolle der eingehenden Rohstoffe und eine entsprechende Analyse haben sich für die komplexen Wirkungen der funktionellen Eigenschaften der Einzelkomponenten in der Lebensmittelmatrix von Lebensmittelschäumen als nicht hinreichend erwiesen. Zur Standarisierung von Schaumstrukturen müssen daher Schwankungen der Rohstoffeigenschaften durch variable Prozessparameter kompensiert werden. Es ist daher wünschenswert ein Verfahren bereitzustellen, welches eine kontinuierliche Inline-Produktüberwachung und Steuerung ermöglicht, so dass bei bereits geringsten Strukturveränderungen eine Änderung der entsprechenden Prozessparameter und somit ein schnelles Eingreifen in Prozess möglich ist. Zudem fehlen derzeit Methoden, die notwendigen Messgrößen als Führungsgrößen für die Verfahrenssteuerung permanent zu erfassen.

Die Aufgabe der vorliegenden Erfindung besteht entsprechend darin, die genanntem Nachteile des Standes der Technik zu überwinden, insbesondere ein Verfahren und eine Vorrichtung bereitzustellen, die eine kontinuierliche und permanente Prozesssteuerung beziehungsweise Verfahrenssteuerung der Schaumherstellung zur Herstellung von Lebensmittelschäumen mit gleichbleibender Qualität ermöglichen.

Diese Aufgabe wird durch ein Verfahren mit den Merkmalen des Anspruchs 1 und einer Vorrichtung zur Durchführung eines solchen Verfahrens mit den Merkmalen des Anspruchs 9 gelöst.

Demnach ist ein Verfahren zur Prozesssteuerung einer Anlage zur kontinuierlichen Herstellung von Schäumen, insbesondere Lebensmittelschäumen, vorgesehen. Dieses Verfahren umfasst die folgenden Schritte:

a) Bestimmen von mindestens einem Ist-Wert von mindestens zwei Zustandsgrößen eines in einem Aufschlagsystem hergestellten Schaums, wobei die mindestens zwei zu bestimmenden Zustandsgrößen ausgewählt sind aus der Gruppe bestehend aus Blasenstruktur und Blasenverteilung, wobei das Bestimmen des Ist-Wertes der einen Zustandsgröße des hergestellten Schaums stromabwärts von dem Aufschlagsystem (d.h. nach Verlassen des Schaums aus dem Aufschlagsystem) erfolgt, wobei die Ist-Werte der Zustandsgrößen des Schaumes durch eine Messmethode zur Bestimmung der Leitfähigkeit, oder durch die Messmethoden Ultraschall, Bildanalyse, Magnetresonanztomographie bestimmt werden; und

b) der mindestens eine bestimmte Ist-Wert der mindestens einen Zustandsgröße des hergestellten Schaums mit mindestens einen vorbestimmten Soll-Wert dieser Zustandsgröße des Schaums verglichen wird und im Falle einer Abweichung des mindestens einen Ist-Wertes von dem mindestens einem Soll-Wert mindestens ein Prozessparameter der kontinuierlichen Herstellung des Schaums automatisch verändert wird.

Das vorliegende Verfahren ermöglicht somit bevorzugt die inline Bestimmung des Ist-Wertes einer Zustandsgröße des hergestellten Schaumes in einer kontinuierlichen Weise. Durch die Inline-Bestimmung der Zustandsgrößen des hergestellten Schaumes ist eine sofortige Rückmeldung an eine vorgesehene Steuereinheit möglich, durch welche wiederum die Prozessparameter des Herstellungsprozesses gesteuert und angepasst werden. Somit können Qualitätsunterschiede in der Schaumstruktur aufgrund von Rohstoff-, Temperatur- und Luftdruckschwankungen minimiert werden. Mit dem vorliegenden Verfahren kann bei Bedarf bereits in den Schäumungsprozess, zum Beispiel durch Verändern der Mischkopfdrehzahl oder des Mischkopfdruckes des Aufschlagsystems, eingegriffen werden, um eine gleichbleibende Qualität des Schaums zu ermöglichen.

In einer Ausführungsform des vorliegenden Verfahrens werden mindestens drei Zustandsgrößen, insbesondere bevorzugt mindestens fünf Zustandsgrößen des hergestellten Schaums bestimmt. Unter einer Zustandsgröße wird vorliegend eine makroskopisch physikalische Größe zur Beschreibung des momentanen Zustands eines physikalischen Systems, hier des Schaums, verstanden.

Entsprechend ist der mindestens eine Ist-Wert der mindestens einen zu bestimmenden Zustandsgröße des hergestellten Schaums ausgewählt aus der Gruppe enthaltend die Zustandsgrößen Schaumkonsistenz, Blasenstruktur, Blasenverteilung, Schaumtextur, Temperatur und Dichte. Bevorzugt werden die fünf Zustandsgrößen Dichte, Temperatur, Schaumkonsistenz, Blasenstruktur und Blasenverteilung bestimmt.

Einige Zustandsgrößen können dabei direkt gemessen werden, wie z.B. Temperatur oder Dichte, während andere Zustandsgrößen, wie z.B. Schaumkonsistenz oder Blasenstruktur, indirekt durch Messung anderer Messgrößen, wie z.B. Druckabfall, oder Messmethoden, wie z.B. Ultraschall, bestimmbar sind.

Bevorzugt wird der mindesten eine Ist-Wert der mindestens einen soeben beschriebenen Zustandsgrößen durch mindestens eine direkte oder indirekte Messmethode bzw. Messgröße, bevorzugt durch mindestens zwei Messmethoden bzw. Messgrößen, insbesondere bevorzugt durch mindestens drei Messmethoden bzw. Messmethoden, ganz bevorzugt durch fünf Messmethoden bzw. Messgrößen bestimmt.

Die mindestens eine (direkte oder indirekte) Messmethode zur Bestimmung des Ist-Wertes einer Zustandsgröße sind dabei Messmethoden (bzw. die sich daraus ergebende Messgröße) zur Bestimmung der Temperatur, des Volumenstroms, des Druckabfalls, zum Beispiel über einer definierten Rohrleitung mit gleichem Durchmesser stromabwärts von dem Aufschlagsystem, der Viskosität, der Leitfähigkeit, der Viskosität, der Festigkeit, der Härte sowie die Messmethoden Ultraschall, Magnetresonanztomographie und/oder Bildanalyse.

In einer besonders bevorzugten Ausführungsform wird der Ist-Wert der mindestens einen Zustandsgröße des Schaums durch die Messgrößen bzw. Messmethoden Temperatur, Dichte, Volumenstrom, Druckabfall, Leitfähigkeit und Ultraschall ermittelt. Insbesondere ist es bevorzugt, wenn die Ist-Werte der Zustandsgrößen des Schaums Dichte, Schaumkonsistenz, Blasenstruktur und Blasenverteilung durch die Messgrößen bzw. Messmethoden Temperatur, Volumenstrom, Druckabfall, Leitfähigkeit und Ultraschall ermittelbar sind.

So ist es möglich, dass die Schaumkonsistenz des hergestellten Schaums stromabwärts vom Aufschlagsystems mittels einer Druckabfallmessung, zum Beispiel in einer Rohrleitung, die das Aufschlagsystem mit einer weiteren Prozessierungseinheit, wie zum Beispiel einer Dosierungseinheit verbindet, gemessen wird. Da Schaum kompressible Eigenschaften besitzt, ist es möglich, die Schaumkonsistenz durch die Messgröße Druckabfall über einer definierten Rohrleitung gleichen Durchmessers, Volumenstrom sowie unter Berücksichtigung der Rohrgeometrie zu bestimmen. Die Schaumkonsistenz kann dabei inline gemessen werden.

Schaumströmungen unterscheiden sich deutlich von Newtonschen Fluiden, so dass die Anwendung der Hagen-Poiseulle-Gleichung nur bedingt möglich ist, da es sich bei Proteinschäumen um strukturviskose Medien mit einer Fließgrenze handelt. Die erwähnte Hagen-Poiseiulle-Gleichung kann somit nur genutzt werden, um ein Maß für die Konsistenz es Schaums näherungsweise zu bestimmen, die bei konstanten äußeren Bedingungen mit den Blasengrößen korreliert. Entsprechend kann die Schaumkonsistenz KS mit der folgenden Gleichung (I) bestimmt werden:

$$KS = \frac{\pi\, r4\, \Delta p}{8\, l\, \dot{V}}$$

wobei $\dot{V}$ der Volumenstrom, r der Rohrdurchmesser, l die Rohrlänge und $\Delta p$ der Druckabfall ist.

Die Messung des Druckabfalls $\Delta p$ in einem Rohrabschnitt ermöglicht die Bestimmung des Konsistenzfaktors K für strukturviskose Nicht-Newtonschen Flüssigkeiten basierend auf der folgenden Gleichung (II):

$$K = \frac{\Delta p}{\frac{2l}{r}\, [(3n+1)/n]^{\,n}} \frac{1}{[\dot{V}/(3{,}14\, r3)]^{n}}$$

wobei n der Fließindex ist.

Der in der Berechnung für den Druckverlust verwendete Fließindex n wird experimentell im Viskosimeter in Abhängigkeit der Dichte bestimmt und liegt bei Lebensmittelschäumen typischerweise zwischen 0,4 und 0,8, bevorzugt zwischen 0,5 und 0,65. Mit diesem Fließindex n kann das relevante Spektrum für die Schaumdichte typischer Lebensmittelschäume und ähnlicher Schäume abgedeckt werden.

Wie bereits oben erwähnt, ist es durch die Messung der Leitfähigkeit des Schaums möglich, Blasenstruktur und Blasenverteilung innerhalb des hergestellten Schaums zu bestimmen. Die Leitfähigkeit wird dabei als reziproker Wert des Widerstands gemessen, wobei sich der Widerstand bei Anlegen einer Spannung in Abhängigkeit der Größe und Anzahl der Luftblasen verändert. So verringert sich bei eingeschlossener Luft die Leitfähigkeit des Schaums und somit kommt es zu einer Erhöhung des Widerstandes. Zur Messung der Leitfähigkeit eines hergestellten Schaums kann eine Vorrichtung bzw. Messeinrichtung verwendet werden, die aus zwei in Strömungsrichtung hintereinander angeordneten Elektroden besteht.

Eine weitere Möglichkeit zur Erfassung der Blasenstruktur besteht in der Anwendung von Ultraschall. In Schäumen erfolgt die Ausbreitung des Ultraschalls in Form von Longitudinalwellen. Die Ultraschallwellen gehen eine Wechselwirkung mit dem Medium ein, durch welche sie durchtreten. Dabei kommt es zur Abschwächung, Dispersion oder Verzerrung des Signals. Aufgrund ihrer kürzeren Wellenlänge (20 kHz bis 10 GHz) zeigen Ultraschallwellen Erscheinungen der Wellenoptik wie Brechung, Beugung und Reflektion. Aufgrund dieser Eigenschaften können mittels Ultraschall die in Schäumen eingeschlossenen Gasbläschen nachgewiesen werden und somit kann die Blasenstruktur des Schaums bestimmt werden.

Darüber hinaus ist es möglich, mittels Ultraschallmessung die Dichte des hergestellten Schaums zu bestimmen. Wird zum Beispiel ein Schaum von Ultraschallwellen durchschallt, erfolgt eine leichte Veränderung der Schaummatrix in Ausbreitungsrichtung. Aufgrund der mechanischen Vibration wird die Schaummatrix deformiert und reagiert je nach rheologischer Ausprägung unterschiedlich auf diese Belastung. Die Reaktion des Schaums auf die mechanische Beanspruchung kann daher zur Beschreibung der rheologischen Eigenschaften wie z.B. der Dichte genutzt werden. Der besondere Vorteil des Einsatzes von Ultraschall ist die Möglichkeit einer nicht-invasiven Inline-Messung, da die verwendeten Bauteile einer Ultraschallvorrichtung keinen direkten Medienkontakt mit dem Schaum besitzen.

Neben der Bestimmung der Leitfähigkeit und der Anwendung von Ultraschall zur Erfassung einer Blasenstruktur und Blasenverteilung eines hergestellten Schaums sind auch weitergehende Bildanalysen, wie zum Beispiel auf der Basis von Magnetresonanztomographie, denkbar. Bildgebende Verfahren bieten allgemein die Möglichkeit, die Größe und die Form von Partikeln einer zu vermessenden Probe darzustellen. Vor allem Mikrocomputertomographieverfahren haben sich als eine nützliche Methode zur nicht-destruktiven 3D-Analyse entwickelt. Die 3D-Bildanalyse liefert quantitative Informationen wie Volumenanteil, Größe, Form und Anisotropie der Blasen in weichen Schäumen wie zum Beispiel geschäumten Milchprodukten und Porenzusammenhang. In Kombination mit weiteren Techniken, wie zum Beispiel Magnetic Resonance Imaging, ist es möglich, detaillierte Erkenntnisse über die Mikrostruktur und deren Auswirkung auf die Produkteigenschaften zu erhalten.

Wie oben angeführt, wird der Ist-Wert einer Zustandsgröße eines Schaums, die zum Beispiel mit einem der eben erwähnten Messverfahren bestimmt werden kann, mit einem vorbestimmten Soll-Wert dieser Zustandsgröße des Schaums verglichen und im Falle einer Abweichung des Ist-Wertes von dem Soll-Wert erfolgt eine automatische Veränderung von einem Prozessparameter der kontinuierlichen Herstellung des Schaums. Liegt eine Abweichung vor, können mindestens ein Prozessparameter, bevorzugt jedoch zwei Prozessparameter oder drei Prozessparameter, insbesondere bevorzugt jedoch mindestens fünf Prozessparameter verändert werden.

Der bzw. die zu verändernden Prozessparameter sind bevorzugt ausgewählt aus der Gruppe enthaltend die Prozessparameter Temperatur, insbesondere die Temperatur im Aufschlagsystem, im Stator und in der flüssigen Phase, die zur Aufschäumung in das Aufschlagsystem einzubringende Gasmenge, wie zum Beispiel die einzubringende Luft- oder Inertgasmenge, die Verweilzeit der aufzuschlagenden Mischung im Aufschlagsystem, die Durchflussmenge der flüssigen Phase, die Pumpenleistung, die Rotordrehzahl im Aufschlagsystem, der Prozessdruck im Mischkopf, die Kühlmittelmenge, die zur Abkühlung des hergestellten Schaums notwendig ist, Rezepturkontrolle und Abgleich.

Die Steuerung der Prozessparameter durch die erfassten Zustandsgrößen erfolgt bevorzugt durch eine systemprogrammierte Steuerung oder eine Fuzzy-Steuerung.

In einer Ausführungsform des vorliegenden Verfahrens erfolgt die Bestimmung des Ist-Wertes von der mindestens einen Zustandsgröße in einer stromabwärts von dem Aufschlagsystem vorgesehenen Leitung, die das Aufschlagsystem mit einerweiteren Prozessierungseinheit, wie zum Beispiel einer Dosiereinheit, verbindet. Entsprechend ist die Bestimmung der Zustandsgröße in dem vorliegenden Verfahren in mindestens einer Rohrleitung zur Förderung des hergestellten Schaums vom Aufschlagsystem zur Weiterverarbeitung vorgesehen. In diesem Leitungs- bzw. Rohrabschnitt werden bevorzugt der Druckabfall, die Leitfähigkeit, Volumenstrom gemessen sowie eine Ultraschallmessung durchgeführt.

Das vorliegende Verfahren kann in einer Vorrichtung umfassend mindesten einen Vorratsbehälter zur Aufnahme der aufzuschäumenden Masse, mindestens ein stromabwärts vom Vorratsbehälter angeordnetes Aufschlagsystem zur Herstellung eines Schaums, mindestens eine stromabwärts vom Aufschlagsystem angeordnete Vorrichtung zur Messung von mindestens einer Messgröße des hergestellten Schaums zur Bestimmung von mindestens einem Ist-Wert der mindestens zwei Zustandsgrößen Blasenstruktur und Blasenverteilung des Schaumes und mindestens eine Steuereinheit zur Einstellung von mindestens einem Sollwert von mindestens einem Prozessparameter zur kontinuierlichen Herstellung des Schaums umfassen, wobei die mindestens eine Vorrichtung zur Messung von mindestens einer Messgröße mindestens eine Leitfähigkeits-Messeinrichtung und/oder mindestens eine Ultraschallvorrichtung umfasst, wobei stromabwärts von der mindestens einen Vorrichtung zu Bestimmung des Ist-Wertes einer Messgröße des Schaumes eine Dosiereinheit angeordnet ist.

In einer Ausführungsform umfasst die mindestens eine Vorrichtung zur Messung von mindestens einer Messgröße des Schaums mindestens eine Vorrichtung zur Temperaturbestimmung, mindestens eine Vorrichtung zur Bestimmung des Volumenstroms, mindestens eine Vorrichtung zur Bestimmung der Dichte, mindestens zwei beabstandet angeordnete Druckmesssonden zur Bestimmung des Druckabfalls, mindestens eine Ultraschallanlage und/oder mindestens eine Leitfähigkeitsmesseinrichtung. Es kann ebenfalls möglich sein, dass ein Viskosimeter stromabwärts von dem Aufschlagsystem zur Herstellung des Schaums angeordnet ist.

Des Weiteren ist in einer Ausführungsform stromabwärts von der mindestens einen Vorrichtung zur Bestimmung einer Messgröße des Schaums eine Prozessierungseinheit zur weiteren Verarbeitung des Schaums, wie z. B. eine Dosiereinheit, angeordnet.

In der vorliegenden Vorrichtung bzw. Anordnung werden die Messgrößen und die sich daraus ergebenden Ist-Werte der Zustandsgrößen des hergestellten Schaumes an die Steuereinheit weitergeleitet, mit den vorher bestimmten Sollwerten der Schaumzustandsgrößen verglichen und beim Auftreten eines Abweichens der Istwerte von den Sollwerten werden die Zustandsgrößen durch die entsprechenden Prozessparameter über die Prozessleitebene eingestellt. Die Steuereinheit erhält die Ist-Werte der Zustandsgrößen des hergestellten Schaumes, insbesondere die Ist-Werte der Mess- bzw. Zustandsgrößen Temperatur des hergestellten Schaumes, des Volumenstroms, Dichte, Schaumkonsistenz, Blasengröße und Blasenverteilung sowie die Temperatur der sich im Vorratsbehälter befindlichen Ausgangsmasse und Angaben zum Massestrom, mit welchem die Ausgangsmasse vom Vorratsbehälter in das Aufschlagsystem eingeführt wird.

Weitere Eigenschaften, Vorteile und Merkmale der Erfindung werden durch die folgende Beschreibung von bevorzugten Ausführungsformen anhand der beiliegenden Zeichnungen deutlich. Es zeigen:

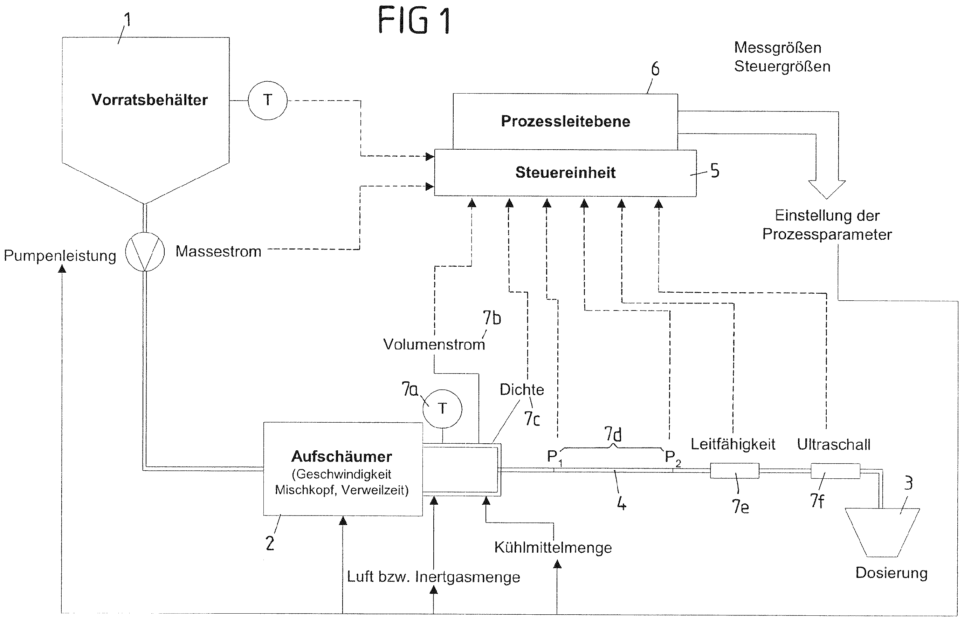

Fig. 1 eine schematische Übersicht einer Vorrichtung gemäß einer bevorzugten Ausführungsform.

Figur 1 zeigt eine allgemeine Übersicht einer Vorrichtung zur Durchführung des vorliegenden Verfahrens.

Die Anordnung umfasst einen Vorratsbehälter 1 zur Aufnahme der aufzuschlagenden Grundmasse, einen stromabwärts vom Vorratsbehälter 1 angeordneten Aufschäumer 2, in welchem die Masse zu einem Schaum mit vorbestimmter Konsistenz aufgeschäumt wird, und eine stromabwärts vom Aufschäumer 2 vorgesehene Dosierungseinrichtung 3 zur weiteren Verarbeitung des hergestellten Schaums.

Stromabwärts vom Aufschäumer 2, insbesondere in der stromabwärts vom Aufschäumer 2 angeordneten Rohrleitung 4, die eine Verbindung zwischen dem Aufschäumer 2 und der Dosierungseinheit 3 herstellt, sind Vorrichtungen (7a-f) zur Messung von verschiedenen Messgrößen des hergestellten Schaumes vorgesehen.

So wird unmittelbar nach dem Austreten des hergestellten Schaumes aus dem Mischkopf des Aufschäumers 2 die Temperatur des Schaumes mittels der Vorrichtung 7a gemessen, dieser Wert wird an eine Steuereinheit 5 weitergeleitet und dort mit einem vorbestimmten Sollwert der Temperatur des aus dem Aufschäumer 2 austretenden Schaumes verglichen. Bei einem Abweichen des Istwertes der Temperatur von dem Sollwert der Temperatur wird über die Steuereinheit 5 und die Prozessleitebene 6 ein Signal zur Einstellung der Kühlmittelmenge für den Aufschäumer 2 abgegeben, so dass die Einstellung der vorbestimmten Solltemperatur erfolgt.

In ähnlicher Weise erfolgt die Messung des Volumenstromes mittels der Vorrichtung 7b sowie der Dichte mittels der Vorrichtung 7c, die neben dem Druckabfall eine Aussage über die Schaumkonsistenz und Viskosität des Schaumes ermöglichen.

Der Druckabfall über der Leitung 4 wird an zwei vorgegebenen Punkten P1, P2 gemessen. Unter Anwendung der angeführten Gleichung zur Bestimmung der Schaumkonsistenz gemäß der Gleichung II mit n= 0,5-0,65 kann dann der Istwert der Konsistenzfaktor K als Maß für die Schaumkonsistenz ermittelt werden, der an die Steuereinheit 5 weitergeleitet wird und im Falle einer Abweichung von dem Sollwert der Schaumkonsistenz zur Einstellung bzw. Änderung der Prozessparameter im Aufschäumer 2 wie z. B. Schergeschwindigkeit des Mischkopfs, Prozessdruck und Verweilzeit sowie der Menge der eingetragenen Luft bzw. des eingetragenen Inertgases erfolgt.

Darüber hinaus sind an der Rohrleitung 4 jeweils Vorrichtungen zur Messung der Leitfähigkeit 7e des Schaums sowie ein Ultraschallmessgerät 7f vorgesehen, deren Messwerte Aussagen zur Blasenstruktur und Blasenverteilung ermöglichen. Liegt hier eine Abweichung der bestimmten Istwerte der Zustandsgrößen von den Sollwerten vor, dann erfolgt auch hier in diesem Fall eine Rückkopplung mit der Steuereinheit 5 und der Prozessleitebene 6, über die die entsprechenden Prozessparameter wie die eingetragene Gasmenge, Geschwindigkeit des Mischkopfes im Aufschäumer 2 und Verweilzeit der aufzuschlagenden Masse im Aufschäumer 2 eingestellt werden.

Im Folgenden werden die verschiedenen Inline-Methoden zur Bestimmung der Zustandsgrößen Dichte, Schaumkonsistenz, Blasenstruktur und Blasenverteilung besch rieben.

a) Messen der Leitfähigkeit zum Erfassen der Blasenstruktur und Blasenverteilung

Zur Bestimmung der Leitfähigkeit des hergestellten Lebensmittelschaums in der Rohrleitung 4 wird eine Leitfähigkeitsmesseinrichtung 7e verwendet, wobei an der Innenwand der Rohrleitung 4 zwei Elektroden in Strömungsrichtung hintereinander angeordnet sind. Diese Elektroden sind zur Rohrwand hin isoliert und in ein Kunststoffpodest eingebaut. Die Stirnflächen der Elektroden weisen einen direkten Kontakt mit dem Strömungsbereich des vorbeiströmenden Schaums auf. Als zweiter Pol dient die Rohrwand. Die Elektroden werden durch die Elektronik mit einer hochfrequenten Wechselspannung über einen Vorwiderstand angesteuert. Zwischen der Elektrode und der Rohrwand baut sich der zweite Widerstand auf. Der Widerstand ist in erster Linie von den Bedingungen direkt an der Elektrode abhängig. Die Spannung wird an der Elektrode abgegriffen, gleichgerichtet und gegebenenfalls gefiltert und verstärkt. Der Spannungsverlauf an der Elektrode wird über einen A/D-Wandler (Analog/Digital-Wandler) mit hoher Auflösung aufgezeichnet. Der A/D-Wandler hat eine Auflösung von 16 Bit mit einer einstellbaren oberen Spannung von 100 mV bis 10 V. Vorliegend wurde ein Messwert pro ms aufgenommen. Die anschließend durchgeführte Quasilinearregression ermöglicht eine Charakterisierung des Schaums.

b) Dichtemessung mittels Ultraschall

Unter Verwendung einer Ultraschallanlage wird mit einem Sensor, mit unterschiedlicher Abschwächung, Dispersion und Verzerrung des Schalls beim Durchdringen des Schaums die Dichte bestimmt. Die Dichte wurde als Referenzwert mit der herkömmlichen Methode (Masse/Volumen) in einem kalibrierten Becher fünf Mal bestimmt. Das der Schaumprobe zu ordnungsbare Echo wird auf deren Signaleigenschaften hin untersucht.

Hierbei wurden zehn Eigenschaften ausgewählt: die zeitlichen Eigenschaften Energie, Abschwächung, Spitzen, Ausbreitung und die spektralen Eigenschaften Roll-off, Abnahme, Abfall, Schiefe, Kurtosis. Ausgehend von diesen bestimmten zehn Eigenschaften des für die Schaummasse relevanten Echos des Ultraschallsignals wird ein Multiclass-Modell erstellt, das eine Aussage über die Schaumdichte ermöglicht. Ein Vergleich der mittels Ultraschall ermittelten Dichtewerte mit den konventionell gemessenen Werten zeigt, dass eine lineare Abhängigkeit der beiden Messmethoden vorliegt.

d) Konsistenzbestimmung

Zur Konsistenzbestimmung wurde das Leitungsrohr 4 nach dem Mischkopf mit zwei Druckmesssonden P1, P2 im Abstand von zwei Metern ausgestattet. Der jeweilige Druck wird jede Sekunde gemessen und gespeichert und an einen PC zur Berechnung der Druckdifferenz übertragen. Zur Bestimmung des Konsistenzfaktors K wird die unbekannte Variable n mit einem Wert zwischen 0,5 und 0,65 gewählt. Bei Berücksichtigung dieses Fließindexes n, sowie des Druckabfalls $\Delta p$ und der Rohrgeometrie (Länge, Rohrdurchmesser) kann ein Faktor für die Schaumkonsistenz berechnet werden.

**Patentansprüche**

1. Verfahren zur Prozesssteuerung einer Anlage zur kontinuierlichen Herstellung von Schäumen, insbesondere Lebensmittelschäumen, umfassend die Schritte

a) kontinuierliches inline Bestimmen von mindestens einem Ist-Wert von mindestens zwei Zustandsgrößen eines in mindestens einem Aufschlagsystem hergestellten Schaums,

wobei die mindestens zwei zu bestimmenden Zustandsgrößen ausgewählt sind aus der Gruppe bestehend aus Blasenstruktur und Blasenverteilung,

wobei das Bestimmen des mindestens einen Ist-Wertes der Zustandsgrößen des Schaums stromabwärts von dem mindestens einen Aufschlagsystem erfolgt,

wobei die Ist-Werte der Zustandsgrößen des Schaumes durch eine Messmethode zur Bestimmung der Leitfähigkeit, oder durch die Messmethoden Ultraschall, Bildanalyse, Magnetresonanztomographie bestimmt werden; und

b) der bestimmte mindestens eine Ist-Wert der Zustandsgröße des Schaumes mit mindestens einem vorbestimmten Sollwert dieser Zustandsgröße des hergestellten Schaumes verglichen wird und im Falle einer Abweichung des Ist-Wertes von dem mindestens einem Sollwert mindestens ein Prozessparameter der kontinuierlichen Herstellung des Schaumes automatisch verändert wird.

2. Verfahren nach Anspruch 1, **dadurch gekennzeichnet, dass** mindestens drei, bevorzugt mindestens fünf Zustandsgrößen des hergestellten Schaums bestimmt werden.

3. Verfahren nach Anspruch 1 oder 2, dass mindesten eine weitere zu bestimmende Zustandsgröße des hergestellten Schaumes ausgewählt ist aus der Gruppe enthaltend die Zustandsgrößen Schaumtextur, Temperatur und Dichte.

4. Verfahren nach einem der vorhergehenden Ansprüche, **dadurch gekennzeichnet, dass** mindestens die sechs Zustandsgrößen Schaumkonsistenz, Blasenstruktur, Blasenverteilung, Schaumtextur, Temperatur und Dichte bestimmt werden.

5. Verfahren nach einem der vorhergehenden Ansprüche, **dadurch gekennzeichnet, dass** die Ist-Werte der Zustandsgrößen des Schaumes durch eine Messmethode zur Bestimmung der Temperatur, der Dichte, des Volumenstroms, des Druckabfalls, der Viskosität, der Leitfähigkeit, sowie durch die Messmethoden Ultraschall, Magnetresonanztomographie, Bildanalyse, bestimmt werden.

6. Verfahren nach einem der vorhergehenden Ansprüche, **dadurch gekennzeichnet, dass** mindestens zwei Prozessparameter, bevorzugt mindestens drei Prozessparameter, insbesondere bevorzugt mindestens fünf Prozessparameter der kontinuierlichen Herstellung des Schaums verändert werden .

7. Verfahren nach einem der vorhergehenden Ansprüche, **dadurch gekennzeichnet, dass** der mindestens eine zu verändernde Prozessparameter ausgewählt ist aus der Gruppe enthaltend Temperatur des Aufschlagsystems, die zur Aufschäumung in das Aufschlagsystem einzubringende Gasmenge, Verweilzeit im Aufschlagsystem, Durchflussmenge der flüssigen Phase, Pumpenleistung, Rotordrehzahl im Aufschlagsystem, Prozessdruck im Mischkopf, Kühlmittelmenge und Rezepturkontrolle.

8. Verfahren nach einem der vorhergehenden Ansprüche, **dadurch gekennzeichnet, dass** der Ist-Wert von mindestens einer Zustandsgröße stromabwärts vom Aufschlagsystem in einem Abschnitt einer Leitung zum Abführen des Schaumes bestimmt wird.

9. Vorrichtung zur Durchführung eines Verfahrens nach einem der vorhergehenden Ansprüche umfassend mindestens einen Vorratsbehälter (1), mindestens ein stromabwärts vom Vorratsbehälter angeordnetes Aufschlagsystem (2), mindestens eine stromabwärts vom Aufschlagsystem angeordnete Vorrichtung (7a-f) zur Messung einer Messgröße des hergestellten Schaumes zur kontinuierlichen inline Bestimmung von mindestens einem Ist-Wert von mindestens zwei Zustandsgrößen des Schaumes ausgewählt aus der Gruppe bestehend aus Blasenstruktur und Blasenverteilung und mindestens eine Steuereinheit (5) zur Einstellung von mindestens einem Soll-Wert von mindestens einem Prozessparameter zur kontinuierlichen Herstellung des Schaums, wobei die mindestens eine Vorrichtung (7e-f) zur Messung von mindestens einer Messgröße mindestens eine Leitfähigkeits-Messeinrichtung (7e) und/oder mindestens eine Ultraschallvorrichtung (7f) umfasst, wobei stromabwärts von der mindestens einen Vorrichtung (7e-f) zu Bestimmung des Ist-Wertes einer Messgröße des Schaumes eine Dosiereinheit angeordnet ist.

10. Vorrichtung nach Anspruch 9, **dadurch gekennzeichnet, dass** die mindestens eine Vorrichtung (7a-f) zur Messung von mindestens einer Messgröße mindestens eine Vorrichtung zur Temperaturbestimmung (7a), mindestens eine Vorrichtung zur Bestimmung des Volumenstroms (7b), mindestens eine Vorrichtung zur Bestimmung der Dichte (7c), mindestens zwei beabstandet angeordnete Druckmesssonden zur Bestimmung des Druckabfalls (7d) umfasst.

**Claims**

1. Method for the process control of a plant for the continuous production of foams, in particular food foams, comprising the steps of

a) continuous inline determination of at least one actual value of at least two state variables of a foam produced in at least one whipping system, wherein the at least two state variables to be determined are chosen from the group consisting of bubble structure and bubble distribution, wherein the determination of the at least one actual value of the state variables of the foam takes place downstream from the at least one whipping system,

wherein the actual values of the state variables of the foam are determined by a measurement method for determining conductivity, or by the measurement methods ultrasound, image analysis, magnetic resonance tomography; and

b) the determined at least one actual value of the state variable of the foam is compared with at least one predetermined setpoint value of this state variable of the produced foam and, in the case of a deviation of the actual value from the at least one setpoint value, at least one process parameter of the continuous production of the foam is automatically altered.

2. Method according to Claim 1, **characterized in that** at least three state variables, preferably at least five state variables, of the produced foam are determined.

3. Method according to Claim 1 or 2, **characterized in that** at least one further state variable of the produced foam that is to be determined is chosen from the group comprising the state variables foam texture, temperature and density.

4. Method according to one of the preceding claims, **characterized in that** at least the six state variables foam consistency, bubble structure, bubble distribution, foam texture, temperature and density are determined.

5. Method according to one of the preceding claims, **characterized in that** the actual values of the state variables of the foam are determined by a measurement method for determining the temperature, the density, the volumetric flow, the pressure drop, the viscosity, the conductivity, and also by the measurement methods ultrasound, magnetic resonance tomography, image analysis.

6. Method according to one of the preceding claims, **characterized in that** at least two process parameters, preferably at least three process parameters, particularly preferably at least five process parameters of the continuous production of the foam are altered.

7. Method according to one of the preceding claims, **characterized in that** the at least one process parameter to be altered is chosen from the group comprising the temperature of the whipping system, the amount of gas to be introduced for foaming into the whipping system, the residence time in the whipping system, the flow rate of the liquid phase, the pump output, the rotor speed in the whipping system, the process pressure in the mixing head, the amount of coolant and recipe control.

8. Method according to one of the preceding claims, **characterized in that** the actual value of at least one state variable is determined downstream from the whipping system, in a section of a conduit for removing the foam.

9. Device for carrying out a method according to one of the preceding claims, comprising at least one storage container (1), at least one whipping system (2) arranged downstream from the storage container, at least one device (7a-7f) arranged downstream from the whipping system and used to measure a measurement variable of the produced foam so as to permit continuous inline determination of at least one actual value of at least two state variables of the foam, chosen from the group consisting of bubble structure and bubble distribution, and at least one control unit (5) for adjusting at least one setpoint value of at least one process parameter for the continuous production of the foam, wherein the at least one device (7e-7f) for measuring at least one measurement variable comprises at least one conductivity-measuring device (7e) and/or at least one ultrasound device (7f), wherein a metering unit is arranged downstream from the at least one device (7e-7f) for determining the actual value of a measurement variable of the foam.

10. Device according to Claim 9, **characterized in that** the at least one device (7a-7f) for measuring at least one measurement variable comprises at least one device for temperature determination (7a), at least one device for determination of the volumetric flow (7b), at least one device for determination of the density (7c), and at least two pressure measurement probes spaced apart from each other and serving to determine the pressure drop (7d).

**Revendications**

1. Procédé de commande de processus dans une installation de production de mousses en continu, en particulier de mousses de denrées alimentaires, comprenant les étapes suivantes

   a) déterminer en continu en ligne au moins une valeur réelle d'au moins deux grandeurs d'état d'une mousse produite dans au moins un système de fouettage,

   dans lequel lesdites au moins deux grandeurs d'état à déterminer sont sélectionnées dans le groupe composé de la structure des bulles et de la distribution des bulles,

   dans lequel la détermination de ladite au moins une valeur réelle des grandeurs d'état de la mousse est effectuée en aval dudit au moins un système de fouettage,

   dans lequel les valeurs réelles des grandeurs d'état de la mousse sont déterminées par une méthode de mesure permettant la détermination de la conductibilité ou par les méthodes de mesure par ultrasons, par analyse d'image, par tomographie à résonance magnétique; et

   b) on compare ladite au moins une valeur réelle déterminée de la grandeur d'état de la mousse à au moins une valeur de consigne prédéterminée de cette grandeur d'état de la mousse produite et dans le cas d'un écart entre la valeur réelle et ladite au moins une valeur de consigne on fait varier automatiquement au moins un paramètre du processus de production en continu de la mousse.

2. Procédé selon la revendication 1, **caractérisé en ce que** l'on détermine au moins trois, de préférence au moins cinq grandeurs d'état de la mousse produite.

3. Procédé selon une revendication 1 ou 2, **caractérisé en ce qu'**au moins une autre grandeur d'état à déterminer de la mousse produite est sélectionnée dans le groupe contenant les grandeurs d'état texture de la mousse, température et densité.

4. Procédé selon l'une quelconque des revendications précédentes, **caractérisé en ce que** l'on détermine au moins les six grandeurs d'état consistance de la mousse, structure des bulles, distribution des bulles, texture de la mousse, température et densité.

5. Procédé selon l'une quelconque des revendications précédentes, **caractérisé en ce que** l'on détermine les valeurs réelles des grandeurs d'état de la mousse par une méthode de mesure permettant de déterminer la température, la densité, le débit en volume, la chute de pression, la viscosité, la conductibilité, ainsi que par les méthodes de mesure par ultrasons, par tomographie à résonance magnétique, par analyse d'image.

6. Procédé selon l'une quelconque des revendications précédentes, **caractérisé en ce que** l'on fait varier au moins deux paramètres du processus, de préférence au moins trois paramètres du processus, en particulier de préférence au moins cinq paramètres du processus de production en continu de la mousse.

7.  Procédé selon l'une quelconque des revendications précédentes, **caractérisé en ce que** ledit au moins un paramètre du processus à faire varier est sélectionné dans le groupe comprenant la température du système de fouettage, la quantité de gaz à introduire dans le système de fouettage pour le moussage, le temps de résidence dans le système de fouettage, le débit de la phase liquide, la puissance de la pompe, le nombre de tours du rotor dans le système de fouettage, la pression du processus dans la tête de mélange, la quantité d'agent réfrigérant et le contrôle de la recette.

8.  Procédé selon l'une quelconque des revendications précédentes, **caractérisé en ce que** l'on détermine la valeur réelle d'au moins une grandeur d'état en aval du système de fouettage dans une partie d'une conduite destinée à l'évacuation de la mousse.

9.  Dispositif pour la mise en oeuvre d'un procédé selon l'une quelconque des revendications précédentes, comprenant au moins un réservoir de stockage (1), au moins un système de fouettage (2) disposé en aval du réservoir de stockage, au moins un dispositif (7a-f) disposé en aval du système de fouettage pour la mesure d'une grandeur de mesure de la mousse produite pour la détermination en continu en ligne d'au moins une valeur réelle d'au moins deux grandeurs d'état de la mousse sélectionnées dans le groupe composé de la structure des bulles et de la distribution des bulles, et au moins une unité de commande (5) pour le réglage d'au moins une valeur de consigne d'au moins un paramètre du processus de production en continu de la mousse, dans lequel ledit au moins un dispositif (7e-f) pour la mesure d'au moins une grandeur de mesure comprend au moins un dispositif de mesure de la conductibilité (7e) et/ou au moins un dispositif à ultrasons (7f), dans lequel une unité de dosage est disposée en aval dudit au moins un dispositif (7e-f) pour la détermination de la valeur réelle d'une grandeur de mesure de la mousse.

10. Dispositif selon la revendication 9, **caractérisé en ce que** ledit au moins un dispositif (7a-f) pour la mesure d'au moins une grandeur de mesure comprend au moins un dispositif de détermination de la température (7a), au moins un dispositif de détermination du débit en volume (7b), au moins un dispositif de détermination de la densité (7c), au moins deux capteurs de mesure de pression disposés de façon espacée pour la détermination de la chute de pression (7d).

# FIG 1

EP 3 096 931 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006057772 A1
- DE 19810092 A1

- EP 0574051 A1